# EUROPÄISCHE PATENTSCHRIFT

(11) **EP 0 263 537 B1**
(45) Veröffentlichungstag und Bekanntmachung des Hinweises auf die Patenterteilung: **29.09.1993**
(21) Anmeldenummer: 87201417.0
(22) Anmeldetag: 23.07.1987
(51) Int. Cl.: H05B 39/04

(54) **Verfahren und Schaltungsanordnung zur helligkeits- und temperaturabhängigen Steuerung einer Lampe, insbesondere zur Beleuchtung einer LCD-Anzeige**
Method and circuit arrangement for controlling the brightness and the depending temperature of a lamp, espcially for the lighting of an LCD display
Procédé et disposition de circuit pour commander la luminosité en tenant compte de la température d'une lampe, plus particulièrement pour l'éclairage d'un affichage à LCD

(30) Priorität: 09.08.1986 DE 3627134
(43) Veröffentlichungstag der Anmeldung: 13.04.1988
(73) Patentinhaber: Philips Patentverwaltung GmbH, 22335 Hamburg (DE); Philips Electronics N.V., 5621 BA Eindhoven (NL)
(72) Erfinder: Dennerlein, Ludwig, Dipl.-Ing., D-8501 Eckental/Eckenhaid (DE); Walters, Eckhard, Dipl.-Ing., D-8505 Röthenbach/Pegnitz (DE)
(74) Vertreter: Peuckert, Hermann, Dipl.-Ing.

(56) Entgegenhaltungen:
- DE-C- 3 029 122
- US-A- 4 233 545
- US-A- 4 388 558
- US-A- 4 675 777

## Beschreibung

Die Erfindung betrifft ein Verfahren zur Steuerung der Helligkeit einer als Lichtquelle zur Beleuchtung einer LCD-Anzeige (Liquid crystal display) vorgesehenen Lampe. LCD-Anzeigen (Flüssigkristall-Anzeigen) werden bevorzugt in Quarzuhren und Taschenrechnern eingesetzt. Da LCD-Anzeigen nur eine geringe Speicherleistung benötigen, werden diese im zunehmenden Maße auch in Geräten der Nachrichtentechnik eingesetzt.

Bei LCD-Anzeigen handelt es sich um passive Anzeigen, d.h., sie steuern das auf sie fallende Licht. LCD-Anzeigen weisen eine zwischen einem front- und rückseitigen Polarisator befindliche Schicht aus "verdrillten nematischen Flüssigkristallen" auf. Sieht man von Wärmeschwankungen ab, so stehen die Länsachsen der langgestreckten Moleküle in der nematischen Phase parallel. Unter Einfluß eines an die LCD-Anzeige angelegten elektrischen Felds kann erreicht werden, daß die anfangs undurchsichtige Flüssigkristallschicht durchsichtig wird.

Liegt kein äußeres elektrisches Feld an, so ist die Richtgung der Achsen jeder Molekülschicht gegenüber der benachbarten Molekülschicht um einen kleinen Winkel verdreht. Tritt beispielsweise das Licht (Beleuchtung durch Tasgeslicht oder Lampe) rückseitig mit horizontaler Polarisation ein, so ist dieses beim Austreten aus der Flüssigkristallschicht vertikal polarisiert. Ist der frontseitige Polarisator ebenfalls vertikal orientiert, so gelangt das Licht ungehindert durch diesen hindurch und die Bildfläche erscheint dem Betrachter hell.

LCD-Anzeigen lassen sich einteilen in eine reflektive Anzeige, d.h. von vorn einfallendes Licht wird je nach Schaltzustand der Bildelemente reflektiert oder absorbiert, eine transmissive Anzeige, d.h., das von der Rückseite durchtretende Licht wird entsprechend der darzustellenden Information gesteuert und eine transflektive Anzeige, welche einen teildurchlässigen Reflektor aufweist, welcher die Eigenschaften der transmissiven und der reflektiven Anzeige besitzt. Bei der Dunkelfeldanzeige (negative contrast display) erfolgt die Darstellung der Information mit hellen Zeichen auf einem dunklen Untergrund, während bei der Hellfeldanzeige (positive contrast display) die Darstellung der Information mit dunklen Zeichen auf einem hellen Untergrund erfolgt.

Die Flüssigkristallschicht ist bei LCD-Anzeigen zwischen rück-und frontseitigen Glasplatten und zwischen einer zwischen den Glasplatten umlaufenden Dichtung eingebettet. Die Glasplatten sind mit durchsichtigen Elektroden versehen, wodurch bei Anlegen einer Spannung an die beiden Elektroden die Flüssigkristallschicht einem elektrischen Feld ausgesetzt wird. Dieses elektrische Feld bewirkt eine Ausrichtung aller Molekülschichten in Feldrichtung, wodurch die Verdrillung in der Flüssigkristallschicht und somit die Drehung der Polarisationsrichtung des durchtretenden Lichts entfällt. Tritt rückseitig Licht mit horizontaler Polarisation ein, so trifft dieses horizontal polarisiert am frontseitig vertikal orientierten Polarisator auf und wird von diesem nicht durchgelassen. Dem Betrachter erscheint damit die Bildfläche dunkel.

Zur Darstellung von Zeichen, Grafiken und Bildern wird häufig eine Matrixanzeige verwendet. Eine solche Matrixanzeige weist horizontal und vertikal jeweils zueinander parallel angeordnete Bildelemente auf. Zur Darstellung eines Satzes von bestimmten Zeichen, z.B. Zahlen, wird häufig die Segmentanzeige, z.B. Sieben-Segment-Anzeige, verwendet. Zur Direktansteuerung bei der Adressierung bzw. Selektion der Bildelemente und deren Helligkeitssteuerung ist die LCD-Anzeige mit einer Steuerschaltung verbunden. Wird jedes Segment bzw. jeder Bildp unkt (pixel) direkt angesteuert, so ist hierfür eine große Zahl von Treiberschaltungen und Zuleitungen erforderlich. Betrachtet man z.B. eine LCD-Anzeige für eine fünfstellige Zahl mit je sieben Segmenten, so sind hierfür 35 Steuerleitungen und eine gemeinsame Rückleitung erforderlich, wenn jedes Segment individuell angesteuert werden soll. Für die Ansteuerung der LCD-Anzeige werden Wechselspannungen mit einer Frequenz über 30 Hz verwendet, um ein flimmerfreies Bild zu bekommen.

Zur Verringerung der Anzahl an Zuleitungen und Treiberschaltungen werden LCD-Anzeigen im Multiplex-Betrieb angesteuert, d.h. z.B. jede Spalte bzw. Zeile wird zeitlich nacheinander aktiviert. Mit wachsendem Multiplexverhältnis sinkt die Differenz der Spannungsamplitude zwischen Spannung von ein- und ausgeschaltetem Segment (oder Bildpunkt), wobei die Schwellenspannung von eingeschalteten und ausgeschalteten Bildpunkten bei LCD-Displays nicht ausgeprägt ist und außerdem mit der Temperatur variiert. Für größere Multiplexverhältnisse ist deshalb eine entsprechende steile Steuerkennlinie erforderlich, wobei zur Helligkeitssteuerung der Bildelemente häufig eine Pulsamplituden-Modulation verwendet wird, d.h., die Amplitude der Ansteuerimpulse bestimmt die Lichtdurchlässigkeit und damit die Helligkeit des Bildpunkts.

Da der Umschaltmechanismus in der Flüssigkristallschicht auf einem thermischen Effekt beruht, muß die Wärmeerzeugung in der LCD-Anzeige in Grenzen gehalten werden. Durch Sonneneinstrahlung können Umfeld-Beleuchtungsstärken bis zu 10⁵ Lux auftreten, so daß die LCD-Anzeige schlecht ablesbar ist.

Zur Verbesserung der Ablesbarkeit ist es für eine LCD-Anzeige mit Hellfeldanzeige bekannt, an der Stirnseite der LCD-Anzeige eine Lichtquelle anzuordnen (DE-PS 23 10 219).

Weiterhin ist aus der DE-PS 30 29 122 eine Flüssigkristall-Anzeigevorrichtung für ein Kraftfahrzeug bekannt. Die transmissive Anzeige weist auf der Rückseite einen lichtführenden Körper auf, welcher zur wahlweisen Einleitung des Umgebungslichts oder des Lichts einer Lichtquelle in die Flüssigkristallschicht bewegbar ausgebildet ist.

In der Tagstellung ist die Lichtquelle ausgeschaltet und das Tageslicht wird mittels einer Linse gebündelt und beleuchtet den lichtführenden Körper. Der lichtführende Körper weist rückseitig eine reflektierende Beschichtung auf, wodurch das einfallende Tageslicht die Flüssigkristallschicht von der Rückseite her beleuchtet.

In der Nachtstellung liegt der lichtführende Körper auf der Rückseite der Flüssigkristall-Anzeigevorrichtung an und die Lichtquelle ist eingeschaltet. Das von der reflektierten Beschichtung des lichtführenden Körpers reflektierte Licht der Lichtquelle dient nun zur Beleuchtung der Flüssigkristall-Anzeigevorrichtung.

Das Einschalten der Lichtquelle und das gleichzeitige motorische Verstellen des lichtführenden Körpers in die Nachstellung erfolgt mittels eines beim Ein- bzw. Ausschalten der Kraftfahrzeugscheinwerfer betätigbaren Schalters. Zur Vermeidung der Betätigung eines Schalters kann ein elektrischer Schalter verwendet werden, welcher in Abhängigkeit von der Helligkeit (mittels beispielsweise eines Kadmiumsulfid-Fotosensors gemessenen Helligkeit) des einfallenden Umgebungslichts die Lichtquelle und den Motor zur Verstellung des lichtführenden Körpers einschaltet. Dadurch wird zwar eine Überhitzung der Flüssigkristall-Anzeigevorrichtung durch Wärmestrahlung der Lichtquelle vermieden, andererseits ist jedoch ein hoher Aufwand für die Verstellung des lichtführenden Körpers erforderlich.

In der US-A 4,675,777 ist eine Einrichtung beschrieben, bei der abhängig von der Temperatur einer Last ein Schaltvorgang ausgelöst wird. Als Beispiel für eine solche Last ist eine weißglühende Glühlampe angegeben. Durch einen Temperatursensor wird die Temperatur dieser Glühlampe ermittelt.

Der Erfindung liegt die Aufgabe zugrunde, ein Verfahren zur Steuerung der Helligkeit einer für die Beleuchtung einer LCD-Anzeige vorgesehenen Lampe derart anzugeben, daß eine Überhitzung der LCD-Anzeige weitgehend ausgeschlossen ist.

Diese Aufgabe wird erfindungsgemäß durch ein Verfahren mit den Merkmalen des Patentanspruchs 1 gelöst.

Das erfindungsgemäße Verfahren weist den Vorteil auf, daß durch die Veränderung der Betriebsspannung in Abhängigkeit von der gemessenen Helligkeit des einfallenden Umgebungslichts einerseits eine gute Ablesbarkeit der LCD-Anzeige auch bei Sonneneinstrahlung gewährleistet ist, andererseits eine Überhitzung der LCD-Anzeige infolge der Wärmeentwicklung durch die Lampe weitgehend vermieden wird. Die LCD-Anzeige kann bei jeder Umfeld-Beleuchtungsstärke optimal beleuchtet werden kann, bis beispielsweise durch anhaltende Sonneneinstrahlung eine kritische Temperatur (Grenztemperatur ca. 90 Grad Celsius) erreicht wird. Wie Untersuchungen ergaben, wirkt die Streuscheibe für die Hintergrundbeleuchtung (bei einer LCD-Anzeige mit Hellfeldanzeige) bei direkter Sonneneinstrahlung wie ein Reflektor, so daß eine gute Ablesbarkeit auch bei abgeschalteter Lampe besteht.

Vorteilhafte Ausführungsformen des erfindungsgemäßen Verfahrens sind in weiteren Patentansprüchen angegeben.

Die Schaltungsanordnung zur Durchführung des Verfahrens gemäß Patentanspruch 4 erfordert einen geringen Schaltungsaufwand und kann weitgehend integriert werden.

Weitere vorteilhafte Ausgestaltungen der Schaltungsanordnung sind in den weiteren Patentansprüchen angegeben.

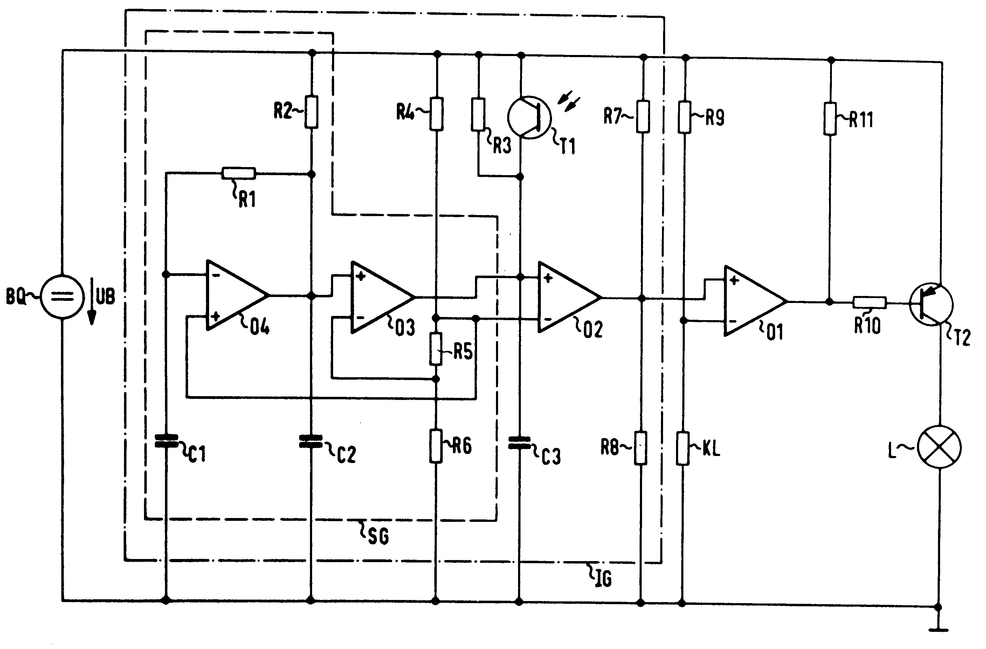

Die Erfindung wird im folgenden anhand einer in der Zeichnung dargestellten Ausführungsform näher beschrieben und erläutert. Bei der in der Figur dargestellten Schaltungsanordnung wird das Verfahren der Pulslängen-Modulation benutzt und in Abhängigkeit von der gemessenen Helligkeit des einfallenden Umgebungslichts und in Abhängigkeit von der gemessenen Umgebungs-Temperatur wird die Betriebsspannung UB für eine Lampe L verändert. Die Schaltungsanordnung weist in Serie zueinander liegende Komparatoren auf, wobei als Komparatoren entsprechend beschaltete Operationsverstärker 01 bis 04 benutzt werden.

Ein Impulsgenerator IG weist einen Sägezahngenerator SG auf, welcher aus dem mit zwei RC-Gliedern R1, C1; R2, C2 beschalteten vierten Operationsverstärker 04, einen diesem Operationsverstärker 04 nachgeschalteten dritten Operationsverstärker 03 und einen mit deren Eingängen verbundenen Spannungsteiler R5, R6 besteht.

Der Widerstand R2 ist mit einem Anschluß an eine Klemme der Betriebsspannungsquelle BQ angeschlossen und ist mit seinem zweiten Anschluß sowohl mit dem Ausgang des vierten Operationsverstärkers 04, mit einem Anschluß des zweiten Kondensators C2, mit einem ersten Anschluß des ersten Widerstands R1 und mit dem nichtinvertierenden Eingang des dritten Operationsverstärkers 03 verbunden. Der zweite Anschluß des Kondensators C2 liegt an Masse an. Mit dem zweiten Anschluß des ersten Widerstands R1 ist sowohl der invertierende Eingang des vierten Operationsverstärkers 04 als auch der erste Anschluß des ersten Kondensators C1 verbunden, dessen zweiter Anschluß an Masse angeschlossen ist. Zwischen den Klemmen der Betriebsspannungsquelle BQ ist ein aus einem vierten Widerstand R4, dem fünften und sechsten Widerstand R5, R6 bestehender Spannungsteiler angeschlossen. Mit dem ersten Abgriff des Spannungsteilers ist der invertierende Eingang des zweiten Operationsverstärkers 02 und der nichtinvertierende Eingang des vierten Operationsverstärkers 04 verbunden. Am zweiten Abgriff des Spannungsteilers ist der invertierende Eingang des dritten Operationsverstärkers 03 angeschlossen.

Weiterhin ist mit der Betriebsspannungsquelle BQ ein dritter Spannungsteiler verbunden, welcher aus einem dritten Kondensator C3 und einem Fototransistor T1 besteht. Parallel zur Hauptstromstrecke des Fototransistors T1 ist ein dritter Widerstand R3 angeordnet. Mit dem Abgriff des dritten Spannungsteilers sind der nichtinvertierende Eingang des zweiten Operationsverstärkers 02 und der Ausgang des dritten Operationsverstärkers 03 verbunden.

Mit der Betriebsspannungsquelle BQ sind ein vierter Spannungsteiler, bestehend aus einem siebten und einem achten Widerstand R7, R8 und ein fünfter Spannungsteiler, bestehend aus einem neunten Widerstand R9 und einem Kaltleiter KL, verbunden. Der Abgriff des vierten Spannungsteilers ist sowohl an den Ausgang des zweiten Operationsverstärkers 02 als auch an den nichtinvertierenden Eingang des ersten Operationsverstärkers angeschlossen. Der Abgriff des fünften Spannungsteilers ist mit dem invertierenden Eingang des ersten Operationsverstärkers 01 verbunden.

An den Ausgang des ersten Operationsverstärkers 01 ist ein erster Anschluß eines elften Widerstands R11 und ein erster Anschluß eines zehnten Widerstands R10 angeschlossen. Der zweite Anschluß des elften Widerstands R11 ist mit einer Klemme der Betriebsspannungsquelle BQ verbunden. An den zweiten Anschluß des zehnten Widerstands R10 ist die Basis eines Schalttransistors T2 angeschlossen. Der Emitter des Schalttransistors T2 ist mit einer Klemme der Betriebsspannungsquelle BQ und der Kollektor des Schalttransistors T2 ist mit einem Anschluß der Lampe L verbunden. Der zweite Anschluß der Lampe L ist an eine Klemme der Betriebsspannungsquelle BQ angeschlossen.

Die Arbeitsweise der in der Figur dargestellten Schaltungsanordnung wird im folgenden näher beschrieben und erläutert.

Der Sägezahngenerator SG weist den vierten Operationsverstärker 04 mit offenem Kollektorausgang auf. Der erste Kondensator C1 und der zweite Kondensator C2 werden über den zweiten Widerstand R2 nahezu gleichzeitig aufgeladen, bis die Differenzspannung zwischen invertierendem und nichtinvertierendem Eingang des vierten Operationsverstärkers 04 negativ wird. Der Ausgangstransistor des vierten Operationsverstärkers 04 wird dann durchgeschaltet und der zweite Kondensator C2 innerhalb kurzer Zeit entladen. Der Ausgangstransistor des vierten Operationsverstärkers 04 bleibt leitend, bis sich der erste Kondensator C1 über den ersten Widerstand R1 und den Ausgangstransistor soweit entladen hat, daß die Differenzspannung zwischen invertierendem und nichtinvertierendem Eingang des vierten Operationsverstärkers 04 wieder positiv wird.

Die am zweiten Kondensator C2 abfallende Sägezahnspannung mit flacheren (im Idealfall zeitlinearen) Anstieg und steileren (im Idealfall abrupten) Abfall führt im dritten Operationsverstärker 03 zu einer kurzen leitenden Phase und zu einer langen Sperrphase des Ausgangstransistors. Der am Kollektor dieses Ausgangstransistors angeschlossene dritte Kondensator C3 wird schnell entladen und wird während der Sperrphase des Ausgangstransistors über die Hauptstromstrecke des Fototransistors T1 geladen. Der von dem Fototransistor T1 gelieferte Strom wird in der Amplitude mit steigender Lichtstärke größer, so daß der dritte Kondensator C3 höher aufgeladen wird. Mittels des zur Hauptstromstrecke des Fototransistors T1 angeordneten dritten Widerstands R3 wird vermieden, daß bei völliger Dunkelheit die Lampe L ganz erlischt.

Mittels des zweiten Operationsverstärkers 02 wird aus der am dritten Kondensator C3 abfallenden Sägezahnspannung ein rechteckimpulsförmiges Signal mit lichtabhängiger Pulslänge und einer Amplitude der halben Betriebsspannung UB gebildet.

Der Widerstandswert des neunten Widerstands R9 ist so festgelegt, daß am invertierenden Eingang des ersten Operationsverstärkers 01 unterhalb der kritischen Temperatur eine Gleichspannung auftritt, die größer ist als die am nichtinvertierenden Eingang des ersten Operationsverstärkers 01 abfallende Gleichspannung. Dadurch wird die Differenzspannung zwischen nichtinvertierendem und invertierendem Eingang des ersten Operationsverstärkers 01 invertiert und der Ausgangstransistor des ersten Operationsverstärkers 01 sperrt und leitet periodisch derart, daß der Schalttransistor T2 bei Dunkelheit jeweils lange gesperrt und kurz leitend, bei Helligkeit entsprechend umgekehrt.

Der im steilen Bereich der R/ϑ Kennlinie betriebene Kaltleiter KL wird bei einer Erhitzung auf eine Temperatur von beispielsweise 90 Grad Celsius hochohmig. Durch den dadurch am invertierenden Eingang des ersten Operationsverstärkers 01 erhöhten Spannungsabfall wird sich die Spannungsdifferenz zwischen invertierendem und nichtinvertierendem Eingang des ersten Operationsverstärkers 01 nicht mehr umkehren und der Schalttransistor T2 bleibt gesperrt, und folglich bleibt die Lampe L dunkel, bis die Temperatur wieder abgesunken ist.

Der Kaltleiter KL wird dabei so anzuordnen sein, daß Eigenerwärmung und/oder Varistoreffekt ausgeschlossen sind. Durch entsprechende Materialien mit besonders steilem Widerstands-Temperatur-Verlauf läßt sich eine hohe Regelgenauigkeit erreichen und ein schnelles Ansprechen des Kaltleiters KL ist bei kleinen Abmessungen des Kaltleiters KL möglich.

## Patentansprüche

1. Verfahren zur Steuerung der Helligkeit einer als Lichtquelle zur Beleuchtung einer LCD-Anzeige vorgesehenen Lampe (L) in Abhängigkeit von der gemessenen Helligkeit des einfallenden Umgebungslichts,
dadurch gekennzeichnet, daß die Betriebsspannung (UB) für die Lampe (L) automatisch so gesteuert wird, daß die Helligkeit der Lampe bei steigender Helligkeit des einfallenden Umgebungslichts zunimmt und umgekehrt und daß bei Überschreitung eines vorgebbaren Schwellenwerts der Temperatur der LCD-Anzeige die Betriebsspannung (UB) ausgeschaltet wird.

2. Verfahren nach Anspruch 1,
dadurch gekennzeichnet, daß die Betriebsspannung (UB) unter Verwendung einer Pulslängen-Modulation gesteuert wird.

3. Verfahren nach Anspruch 1,
dadurch gekennzeichnet, daß die Betriebsspannung (UB) unter Verwendung einer Pulsamplituden-Modulation gesteuert wird.

4. Schaltungsanordnung zur Steuerung der Helligkeit einer als Lichtquelle zur Beleuchtung einer LCD-Anzeige vorgesehenen Lampe (L) in Abhängigkeit von der gemessenen Helligkeit des einfallenden Umgebungslichts, und zur Durchfuhrung des Verfahrens nach Anspruch 1, wobei die Impulsdauer von mittels eines Impulsgenerators (IG) erzeugten Impulsen in Abhängigkeit von der mit einem Helligkeitssensor (T1) gemessenen Helligkeit verändert wird und wobei mittels so erzeugter Steuerimpulse ein im Stromkreis der Lampe (L) liegender, die Unterbrechung bzw. Einschaltung des Stromflusses durch die Lampe (L) ermöglichender Schalter (T2) gesteuert wird,
dadurch gekennzeichnet, daß die Impulsdauer der erzeugten Impulse ferner in Abhängigkeit von dem mit einem Temperatursensor in Form eines Kaltleiters (KL) festgestellten Überschreiten bzw. Unterschreiten eines Schwellwertes der Temperatur der LCD-Anzeige verändert wird und daß die Steuerimpulse einem ersten Komparator (01) zugeführt werden, welcher die Impulsdauer mit einer am Abgriff eines Spannungsteilers (KL, R9) abfallenden Spannung vergleicht, welcher mit der Betriebsspannungsquelle (BQ) verbunden ist und aus dem Kaltleiter (KL) und einem Widerstand (R9) besteht, daß der Schalter ein Schalttransistor (T2) ist, und daß der Ausgang des ersten Komparators mit der Basis des Schalttransistors (T2) in Verbindung steht, dessen Emitter mit der Betriebsspannungsquelle (BQ) und dessen Kollektor mit der Lampe (L) verbunden ist.

5. Schaltungsanordnung nach Anspruch 4,
dadurch gekennzeichnet, daß zur Impulsformung der Steuerimpulse, diese einen zweiten Komparator (02) zugeführt werden, dessen Ausgang mit dem ersten Komparator (01) verbunden ist.

6. Schaltungsanordnung nach Anspruch 5,
dadurch gekennzeichnet, daß mittels eines Sägezahngenerators (SG) erzeugte Impulse einem dritten Komparator (03) zugeführt werden, dessen Ausgang mit dem zweiten Komparator (02) verbunden ist.

7. Schaltungsanordnung nach Anspruch 6,
dadurch gekennzeichnet, daß der Sägezahngenerator (SG) aus einem mit zwei RC-Gliedern (R1, C1) beschalteten vierten Komparator besteht.

8. Schaltungsanordnung nach einem der Ansprüche 4 bis 7,
dadurch gekennzeichnet, daß als Komparator entsprechend beschaltete Operationsverstärker (01, ..., 04) benutzt werden.

9. Schaltungsanordnung nach Anspruch 9,
dadurch gekennzeichnet, daß der Ausgang des dritten Operationsverstärkers (03) mit dem Abgriff eines mit der Betriebsspannungsquelle (BQ) verbundenen Spannungsteiler verbunden ist, welcher aus einem Kondensator (C3) und einem Fototransistor (T1) besteht.

10. Schaltungsanordnung nach Anspruch 9,
dadurch gekennzeichnet, daß parallel zur Hauptstromstrecke des Fototransistors (T1) ein Widerstand (R3) angeordnet ist.

## Claims

1. A method for controlling the brightness of a lamp (L), used as a light source for illuminating an LCD, in dependence on the measured brightness of the incident ambient light, characterized in that the operating voltage (UB) for the lamp (L) is automatically controlled so that the brightness of the lamp increases as the brightness of the incident ambient light increases and vice versa, the operating voltage (UB) being switched off when a presettable threshold value of the temperature of the LCD is exceeded.

2. A method as claimed in Claim 1, characterized in that the operating voltage (UB) is controlled utilizing pulsewidth modulation.

3. A method as claimed in Claim 1, characterized in that the operating voltage (UB) is controlled utilizing pulse amplitude modulation.

4. A circuit arrangement for controlling the brightness of a lamp (L), used as a light source for illuminating an LCD,in dependence on the measured brightness of the incident ambient light, and for performing the method claimed in Claim 1, in which the pulse duration of pulses generated by means of a pulse generator (IG) is changed in dependence on the brightness measured by means of a brightness sensor (T1) and in which a switch (T2) which is included in the current circuit of the lamp (L) and which enables switching on and off of the current through the lamp (L) is controlled by means of control pulses thus generated, characterized in that the pulse duration of the pulses generated is also changed in dependence on whether the temperature of the LCD exceeds or drops below a threshold value as detected by means of a temperature sensor in the form of a PCT resistor (KL), the control pulses being applied to a first comparator (01) which compares the pulse duration with a voltage drop at a tap of a voltage divider (KL, R9), is connected to the operating voltage source (BQ) and consists of the PCT resistor (KL) and a resistor (R9), the switch being a switching transistor (T2)and the output of the first comparator being connected to the base of the switching transistor (T2) whose emitter is connected to the operating voltage source (BQ) and whose collector is connected to the lamp (L).

5. A circuit arrangement as claimed in Claim 4, characterized in that for shaping the control pulses are applied to a second comparator (02) whose output is connected to the first comparator (01).

6. A circuit arrangement as claimed in Claim 5, characterized in that pulses generated by means of a sawtooth generator (SG) are applied to a third comparator (03) whose output is connected to the second comparator (02).

7. A circuit arrangement as claimed in Claim 6, characterized in that the sawtooth generator (SG) consists of a fourth comparator comprising two RC-members (R1,C1).

8. A circuit arrangement as claimed in any one of the Claims 4 to 7, characterized in that appropriately constructed operational amplifiers (01, ..., 04) are used as comparators.

9. A circuit arrangement as claimed in Claim 8, characterized in that the output of the third operational amplifier (03) is connected to the tap of a voltage divider which is connected to the operating voltage source (BQ) and consists of a capacitor (C3) and a photo-transistor (T1).

10. A circuit arrangement as claimed in Claim 9, characterized in that a resistor (R3) is connected parallel to the main current path of the photo-transistor (T1).

## Revendications

1. Procédé de commande de la luminosité d'une lampe (L) prévue comme source lumineuse pour l'éclairage d'un affichage à LCD, en fonction de la luminosité de la lumière ambiante incidente mesurée, caractérisé en ce que la tension de fonctionnement (UB) sur la lampe (L) est commandée automatiquement de telle sorte que la luminosité de la lampe augmente dans le cas d'une luminosité croissante de la lumière ambiante incidente et vice versa et que, lors du dépassement par excès d'une valeur de seuil prédéterminable de la température de l'affichage à LCD, la tension de fonctionnement (UB) est coupée.

2. Procédé selon la revendication 1, caractérisé en ce que la tension de fonctionnement (UB) est commandée par la mise en oeuvre d'une modulation d'impulsions en durée.

3. Procédé selon la revendication 1, caractérisé en ce que la tension de fonctionnement (UB) est commandée par la mise en oeuvre d'une modulation d'impulsions en amplitude.

4. Montage de circuit pour commander la luminosité d'une lampe (L) prévue comme source lumineuse pour l'éclairage d'un affichage à LCD, en fonction de la luminosité de la lumière ambiante incidente mesurée et pour réaliser le procédé selon la revendication 1, montage dans lequel la durée des impulsions produites par un générateur d'impulsions (IG) est modifiée en fonction de la luminosité mesurée par un capteur de luminosité (T1) et dans lequel un commutateur (T2) disposé dans le circuit de la lampe (L) et qui permet l'interruption ou le rétablissement du flux de courant traversant la lampe (L) est commandé par les impulsions de commande ainsi produites, caractérisé en ce que la durée des impulsions produites est en outre modifiée en fonction du dépassement par excès ou par défaut d'une valeur de seuil de la température de l'affichage à LCD constaté par un capteur de température ayant la forme d'un thermistor (KL) et les impulsions de commande sont acheminées à un premier comparateur (D1) qui compare la durée des impulsions à une tension obtenue sur la prise d'un diviseur de tension (KL, R9) qui est connecté à la source de tension de fonctionnement (BQ) et est constitué du thermistor (KL) et d'une résistance (R9), le commutateur est un transistor de commutation (T2) et la sortie du premier comparateur est connectée à la base du transistor de commutation (T2) dont l'émetteur est relié à la source de tension de fonctionnement (BQ) et son collecteur à la lampe (L).

5. Montage de circuit selon la revendication 4, caractérisé en ce que, pour former les impulsions de commande, celles-ci sont acheminées à un second comparateur (02) dont une sortie est connectée au premier comparateur (01).

6. Montage de circuit selon la revendication 5, caractérisé en ce que les impulsions produites sont acheminées via un générateur d'impulsions en dents de scie (SG) à un troisième comparateur (03), dont la sortie est connectée au second comparateur (02).

7. Montage de circuit selon la revendication 6, caractérisé en ce que le générateur d'impulsions en dents de scie (SG) est constitué d'un quatrième comparateur connecté à deux éléments RC (R1, C1).

8. Montage de circuit selon l'une quelconque des revendications 4 à 7, caractérisé en ce que l'on utilise comme comparateur des amplificateurs opérationnels connectés de manière adéquate (01,..., 04).

9. Montage de circuit selon la revendication 9, caractérisé en ce que la sortie du troisième amplificateur opérationnel (03) est reliée à la prise d'un diviseur de tension connecté à la source de tension de fonctionnement (BQ), ce diviseur étant constitué d'un condensateur (C3) et d'un phototransistor (T1).

10. Montage de circuit selon la revendication 9, caractérisé en ce qu'une résistance (R3) est disposée en parallèle avec le trajet de courant principal du phototransistor (T1).
